# EUROPEAN PATENT SPECIFICATION

(11) **EP 4 279 777 B1**
(45) Date of publication and mention of the grant of the patent: **28.10.2026**
(21) Application number: 21918952.9
(22) Date of filing: 26.09.2021
(51) Int. Cl.: F16K 11/085, F16K 27/06

(54) **CONTROL VALVE**
STEUERVENTIL
VANNE DE COMMANDE

(30) Priority: 18.01.2021 CN 202110065261
(43) Date of publication of application: 22.11.2023
(73) Proprietor: Hangzhou Ao Ke Mei Rui Technology Co., Ltd., Hangzhou, Zhejiang 310018 (CN)
(72) Inventor: HU, Meiyan, Hangzhou, Zhejiang 310018 (CN)
(74) Representative: Studio Torta S.p.A.
(86) International application number: PCT/CN2021/120577
(87) International publication number: WO 2022/151761

(56) References cited:
- EP-A1- 3 385 583
- EP-A1- 4 325 104
- CN-A- 103 742 675
- CN-A- 104 806 779
- CN-A- 111 828 687
- CN-A- 111 828 687
- CN-A- 111 981 164
- CN-U- 204 647 386
- CN-U- 206 175 729
- US-A- 3 658 093

## Description

This application claims the priority to Chinese Patent Application No. 202110065261.1, titled "VALVE DEVICE", filed with the China National Intellectual Property Administration on January 18, 2021.

### FIELD

The present application relates to the technical field of fluid control, and in particular to a control valve.

### BACKGROUND

Some systems need to use a multi-passage control valve to control a flow path. For example, a motor vehicle may generally have multiple control valves in order to conduct controlling at present. In a multi-passage control valve, a sealing member and an elastic pad with separate structures are used for realizing sealing and sliding-fit with a valve core.

The patent of CN111828687A discloses a control valve, which has five or more interfaces, a valve body component and a valve core component. The valve core component can rotate under driving; the valve body component is provided with communication ports corresponding to the interfaces; the valve core component includes at least two first conduction parts and at least one second conduction part; the first conduction parts are substantially longitudinally arranged to conduct the two vertical interfaces; the length of matching opening parts of the first conduction parts is greater than the width of the matching opening parts of the first conduction parts; the second conduction part is substantially transversely arranged to conduct the two interfaces laterally adjacent to each other; and the height of a matching opening part of the second conduction part is less than the width of the matching opening part of the second conduction part. The patent of EP4325104A1 discloses a control valve, including a valve body, a valve core, and a sealing component. The control valve has communication ports; the communication ports are communicated with a valve cavity; the communication ports includes first communication ports; the first communication ports are arranged along the height direction of a side wall portion and the circumferential direction of the side wall portion; two first communication ports is arranged on the side wall portion along the circumferential direction of the side wall portion; the sealing component includes a sealing body portion; the sealing body portion is located between the valve core and the side wall portion; the sealing body portion has through holes; the number of the through holes is the same as that of the first communication ports, and the through holes are correspondingly communicated with the first communication ports.

### SUMMARY

In order to provide a control valve, the following technical solution is provided according to the present application:
a control valve includes a valve body component and a valve core component, the control valve has a valve chamber, at least most of the valve core component is located in the valve chamber, the valve core component is driven to be rotatable; the valve body component includes a side wall portion, the side wall portion is a peripheral wall or at least a part of the peripheral wall of the valve chamber, the valve body component is provided with a communication hole, the control valve further includes a sealing component, the sealing component is located between the side wall portion and the valve core component, the sealing component includes an elastic pad and a sealing member, the elastic pad and the sealing member are fixed to form an integral structure, the elastic pad is located between the sealing member and the side wall portion of the valve body component, the sealing member is in contact with the valve core component, a surface of the sealing member in contact with the valve core component is smoother than a surface of the elastic pad in contact with the side wall portion, the control valve has a rotation suppression portion, the rotation suppression portion is integrally formed with or fixedly connected to or in position-limiting connection with an inner surface of the valve body component, and the rotation suppression portion is fitted with the sealing component to limit the sealing component from rotating clockwise or counterclockwise relative to the valve body component. The sealing member is fixedly connected to the elastic pad, the sealing member includes a hemming portion and a fitting portion, the fitting portion is arranged toward the valve core component and is in sliding fit with the valve core component, the elastic pad has a first through hole, the first through hole is in communication with the communication hole, the sealing member further has a second through hole, the second through hole is in communication with the communication hole through the first through hole, the second through hole is formed in the hemming portion, at least a part of the hemming portion is inserted into the first through hole and is fixed to an inner wall of the first through hole by adhesion, and a height of the hemming portion is less than a length of the first through hole.

In this case, the sealing member of the control valve includes the elastic pad and the sealing member which have the integral structure, the surface of the sealing member in contact with the valve core component is smoother than the surface of the elastic pad in contact with the side wall portion, the control valve is provided with the rotation suppression portion, the rotation suppression portion is integrally formed with or fixedly connected to or in position-limiting connection with the inner surface of the valve body component, and the rotation suppression portion is fitted with the sealing member, so as to limit the sealing component from rotating clockwise or counterclockwise relative to the valve body component, limit the elastic pad from rotating relative to the side wall portion, and prevent the sealing component from moving relative to the side wall portion, which has a simple structure and facilitates of assembling.

### BRIEF DESCRIPTION OF THE DRAWINGS

FIG. 1 is a schematic exploded view of a control valve according to the present application;
FIG. 2 is a schematic perspective view of a sealing component according to a first embodiment of the present application;
FIG. 3 is a schematic perspective view of a valve body component according to the first embodiment of the present application;
FIG. 4 is a schematic partially cross-sectional view of the valve body component in FIG. 3;
FIG. 5 is a schematic partially enlarged view of the portion I in FIG. 4;
FIG. 6 is a schematic partially cross-sectional view of the sealing component in FIG. 2;
FIG. 7 is a schematic perspective view of the sealing component according to a second embodiment of the present application;
FIG. 8 is a schematic perspective view of the valve body component according to the second embodiment of the present application; and
FIG. 9 is a schematic perspective view of a cover of the control valve according to the present application.

### DETAILED DESCRIPTION OF THE EMBODIMENTS

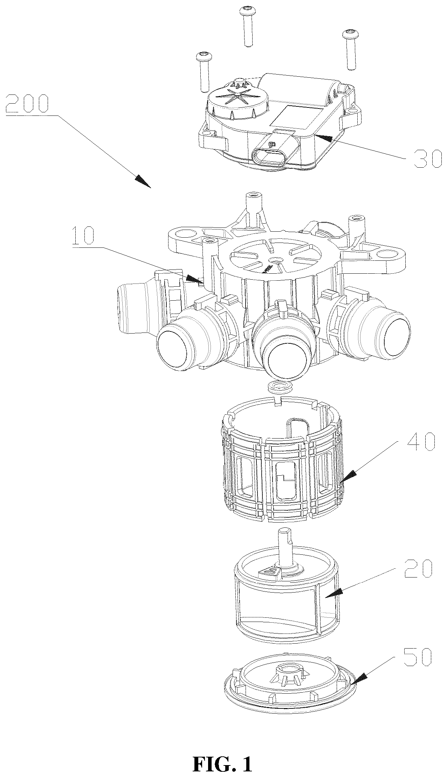

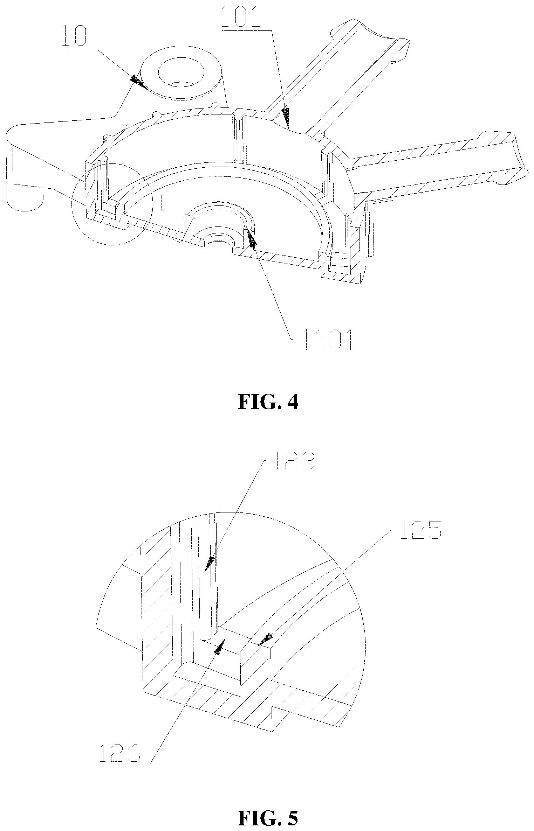

The technical solution is described below in conjunction with specific embodiments. As shown in FIG. 1 to FIG. 5, a control valve 200 includes a valve body component 10, a valve core component 20, a driving box 30, and a sealing component 40. The control valve has a valve chamber 102, the valve core component 20 is rotatable driven by a driving member in the driving box, for example, the driving member may be a motor or a motor and a reduction gear set. The valve body component 10 includes a side wall portion 12 and a cover 50, and the side wall portion 12 is fixedly connected to the cover 50. The side wall portion 12 is a peripheral wall or at least a part of the peripheral wall of the valve chamber, the valve body component 10 has a communication hole 101, and multiple communication holes 101 may be provided. For example, in this embodiment, five communication holes 101 are provided, alternatively, greater than or less than five communication holes 101 can be provided. The sealing component 40 is located between the side wall portion 12 and the valve core component 20; the sealing component 40 includes an elastic pad 41 and a sealing member 42, the elastic pad 41 is fixedly connected to the sealing member 42, the elastic pad 41 is located between the sealing member 42 and the side wall portion 12 of the valve body component 10, the sealing member 4 is in contact with the valve core component 20, a surface of the sealing member in contact with the valve core component is smoother than a surface of the elastic pad in contact with the side wall portion, the control valve has a rotation suppression portion, the rotation suppression portion is integrally formed with or fixedly connected to or in position-limiting connection with an inner surface of the valve body component, and the rotation suppression portion is fitted with the sealing component to limit the sealing component from rotating clockwise or counterclockwise relative to the valve body component. The acting force between the sealing member 42 and the valve core component 20 includes sliding friction force, and the acting force between the elastic pad 41 and the side wall portion 12 is static friction force. The rotation suppression portion can limit the sealing component 40 from rotating relative to the side wall portion 12. The elastic pad 41 and the sealing member 42 may be fixed together by adhesion. The sealing member 42 may be made of Teflon, and the sealing member 42 can be not only used for sealing, but also has a certain lubricating performance, which can reduce the friction between the valve core component and the sealing component, thereby reducing the driving force of the control valve.

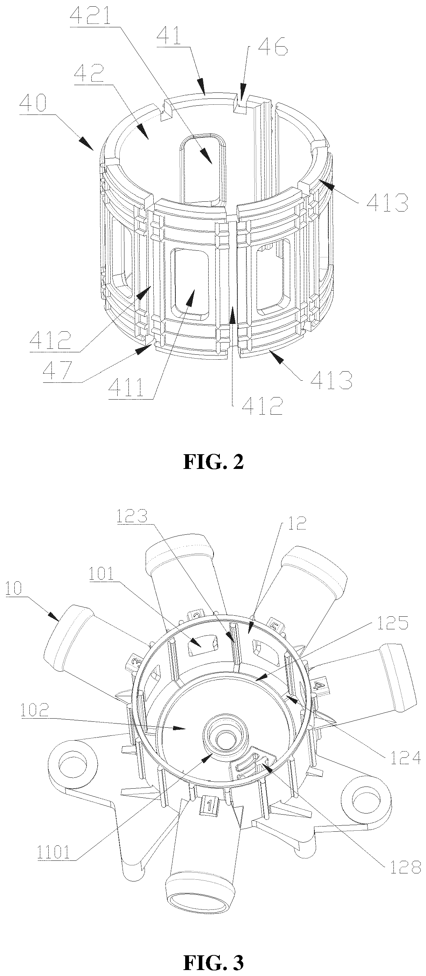

As shown in FIG. 2, the elastic pad 41 has a first through holes 411, a first recessed groove 412 and a second recessed groove 413, the first through holes 411 are in communication with the communication holes 101, openings of the first recessed grooves 412 and the second recessed grooves 413 are configured toward the side wall portion 12. The first recessed groove 412 may extend from one end of the elastic pad 41 to the other end of the elastic pad 41 in a longitudinal direction of the elastic pad 41, and multiple first recessed grooves 412 are provided. In this embodiment, the first recessed grooves 412 are distributed on two sides of the first through hole 411, and the first recessed groove 412 located between two adjacent first through holes 411 may be located in the middle of a portion located between the two adjacent first through holes 411. The first recessed grooves 412 may be arranged axially, the second recessed grooves 413 may be arranged circumferentially or in other form, and an expansion space for the elastic pad 41 may be formed by the second recessed grooves 413 when the elastic pad 41 is compressed under force. In this embodiment, the second recessed grooves 413 are located on at least one side of the elastic pad 41 in the longitudinal direction of the elastic pad 41, and the first recessed grooves 412 are in communication with the second recessed grooves 413.

As shown in FIG. 3, the valve body component 10 includes protruding ribs 123 which protrude from the side wall portion 12. In this embodiment, the protruding ribs 123 protrude from the side wall portion 12.

The number of the protruding ribs 123 corresponds to the number of the first recessed grooves 412, each protruding rib 123 is inserted into the corresponding first recessed groove 412, and the protruding rib 123 is in interference fit with the corresponding first recessed groove 412. The arrangement of the protruding ribs 123 and the first recessed grooves 412 can realize the positioning and mounting of the sealing component 40, so that the positions of the first through holes 411 correspond to those of the communication holes 101 to communicate the fluid. In addition, the fitting manner between the protruding ribs 123 and the first recessed grooves 412 can limit a position of the sealing component 40, and prevent the sealing component 40 from moving when the valve core component rotates. In this embodiment, the rotation suppression portion includes the protruding ribs 123 and the first recessed grooves 412. In this embodiment, a height of the protruding ribs 123 protruding from the side wall portion 12 is less than a depth of the first recessed grooves 412, so that a certain gap is formed between the protruding rib 123 and a bottom of the first recessed groove 412. In this way, the elastic pad 41 abuts against the side wall portion 12, and an expansion space for the elastic deformation generated by the elastic pad can be reserved by the gaps formed between the protruding ribs 123 and the bottom of the first recessed grooves 412.

As shown in FIG. 3 to FIG. 5, the valve body component 10 further includes a bottom wall 11 and boss portions 124, the bottom wall 11 is integrally formed with the side wall portion 12, and the boss portions 124 protrude from the bottom wall 11. Each boss portion 124 includes a blocking portion 125 and a first supporting portion 126, the blocking portion 125 protrudes from the first supporting portion 126 by a set distance, at least part of the first supporting portion 126 is located between the protruding rib 123 and the blocking portion 125, and a position-limiting space 127 is formed between the blocking portion 125 and the protruding rib 123. After the sealing component 40 is mounted in the valve body component 10, one end of the sealing component 40 is accommodated in the position-limiting space 127. The sealing component 40 has first notch portions 46, the first notch portions 46 are located in an end surface of the sealing component and extend toward an interior of the sealing component 40, and the first supporting portion 126 is inserted into the corresponding first notch portion 46 and abuts against the sealing component 40. The arrangement of the boss portions 124 can limit a position of the end of the sealing component 40, and prevent the end of the sealing component 40 from being separated from the valve body component 10. The rotation suppression portion can further include that the first supporting portion 126 is inserted into the corresponding first notch portion 46 and abuts against the sealing component 40.

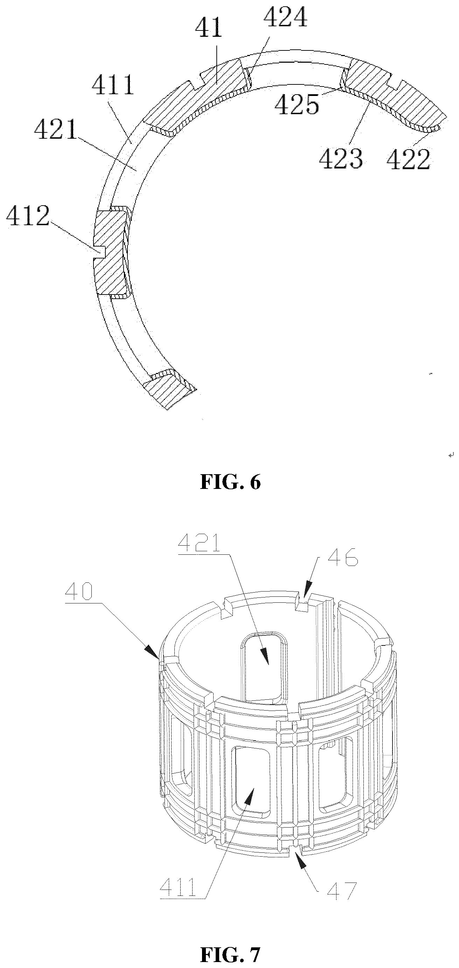

As shown in FIG. 2 and FIG. 6, the sealing member 42 includes position-limiting portions 422, a fitting portion 423, a hemming portion 424 and a connecting portion 425, the fitting portion 423 is in sliding fit with the valve core component 20, the two position-limiting portions 422 are located on two sides of the sealing member 42 in a circumferential direction of the sealing member 42, and each position-limiting portion 422 has an outward protruding structure or a bending structure, which can further limit the position of the two sides of the elastic pad 41, so as to limit the deformation range of the elastic pad 41 after extrusion. In this embodiment, since the position-limiting fit manner between the protruding ribs 123 and the first recessed grooves 412 is provided, the position-limiting portions 422 are located on two sides of the elastic pad 41, and a height of the position-limiting portions is less than a thickness of the two sides of the elastic pad, so that the expansion space for the elastic pad 41 can be formed. As shown in FIG. 3, the valve body component 10 has a stop portion 128, the stop portion 128 protrudes from the side wall portion 12 and is inserted into the valve chamber 102, and the position-limiting portions 422 are in contact with a side surface of the stop portion 128. The position-limiting portions 422 are in contact with the side surface of the stop portion 128 within the elastic range of the sealing component, which can limit the sealing component from rotating relative to the valve body component. The rotation suppression portion can further include that the position-limiting portions 422 are in contact the side surface of the stop portion 128.

A second through hole 421 is formed in the hemming portion 424, and at least a part of the hemming portion 424 is inserted into the first through hole 411 and is fixed to an inner wall of the first through hole 411 by adhesion, so that the first through hole 411 is in communication with the second through hole 421. A height of the hemming portion 424 is less than a length of the first through hole 411, so that the sealing member 42 can be prevented from contacting a second side wall portion 122 when the elastic pad 41 is compressed, thus the elastic pad 41 can have greater compression space.

In this embodiment, on one hand, the arrangement of the hemming portion 424 increases a contact area between the elastic pad 41 and the sealing member 42 and improves the adhesive force between the elastic pad 41 and the sealing member 42, on the other hand, the hemming portion 424 is inserted into the first through hole 411 so as to limit the position of the sealing member 42 and the elastic pad 41, and prevent the seal 42 and the elastic gasket 41 from being misplaced when the valve core component rotates.

The connecting portion 425 is located between the hemming portion 424 and the fitting portion 423, and the hemming portion 424 is rounding connected to the fitting portion 423 by the connecting portion 425. In this embodiment, a diameter of a connection position of the connecting portion 425 with the fitting portion 423 gradually increases in a direction toward the valve core component, and the connecting portion 425 can be used for buffering and guiding during the rotation of the valve core component.

Referring to FIG. 1, FIG. 3, FIG. 4, FIG. 8 and FIG. 9, the valve body component 10 is provided with a first valve core supporting portion 1101 and a second valve core supporting portion 1102, the first valve core supporting portion 1101 protrudes from the bottom wall, the second valve core supporting portion 1102 protrudes from an end surface of the cover 50, a part of the valve core component 20 is inserted into the first valve core supporting portion 1101, another part of the valve core component 20 is inserted into the second valve core supporting portion 1102, and the valve core component 20 is rotatably supported on the first valve core supporting portion 1101 and the second valve core supporting portion 1102; the first valve core supporting portion 1101 and the second valve core supporting portion 1102 both include a notch portion and a rib plate portion. Taking the second valve core supporting portion 1102 as an example, the second valve core supporting portion 1102 includes notch portions 112 and a rib plate portions 113, the impurities in the coolant entering the fitting portion 111 can be discharged in time by the arrangement of the notch portions 112 so as to prevent the valve core component from being stuck. The arrangement of the rib plate portions 113 can improve the strength of the second valve core supporting portion 1102 and reduce the influence of the notch portions 112 on the strength of the second valve core supporting portion 1102. In addition, a height of the second valve core supporting portion 1102 is greater than or equal to a height of the boss portion 124, which can reduce the friction of the valve core component. In addition, the boss portions 124 can prevent the sealing component 40 from being separated from the valve body component 10 when it is compressed and deformed.

The cover 50 further includes a second supporting portions 51, an end surface of the sealing component 40 is provided with the first notch portions 46, another end surface of the sealing component 40 is provided with second notch portions 47, the first supporting portion 126 is inserted into the corresponding first notch portion 46 and abuts against the sealing component 40, the second supporting portion 51 is inserted into the corresponding second notch portion 47 and abuts against the sealing component 40, so as to further limit the position of the sealing component 40.

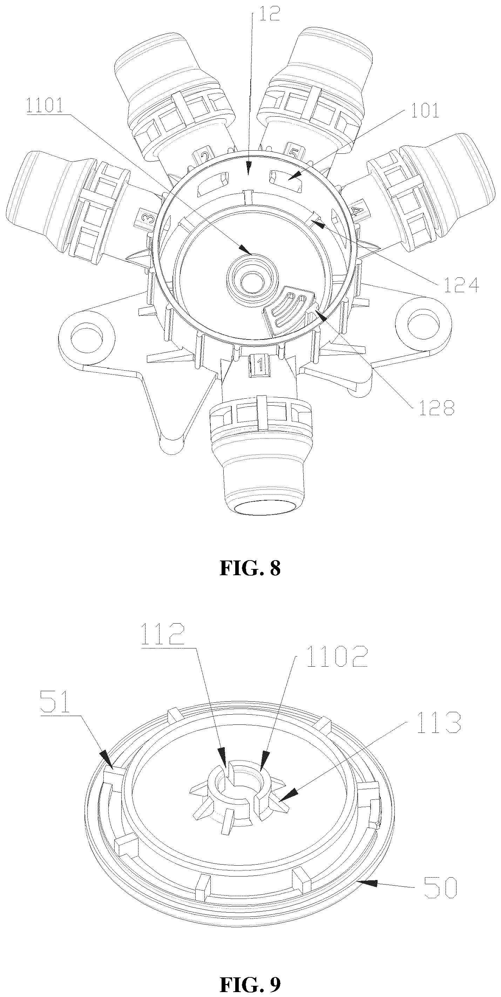

FIG. 7 is a schematic perspective view of the sealing component according to a second embodiment of the present application; compared with the first embodiment, the main difference is that: the sealing component 40 is not provided with the first recessed grooves 412. FIG. 8 is a schematic perspective view of the valve body component according to the second embodiment of the present application; compared with the first embodiment, the main difference is that: the protruding ribs 123 are not provided. Referring to FIG. 7 and FIG. 8, the sealing component 40 is arranged in an inner chamber of the valve body component, the position-limiting portions 422 of the sealing component are in contact with the side surface of the stop portion 128; the position-limiting portions 422 of the sealing component are in contact with the side surface of the stop portion 128 within the elastic range of the sealing component, which can limit the sealing component from rotating relative to the valve body component, thereby simplifying the structure and reducing the difficulty of assembly compared with the first embodiment. Other similar arrangements are not repeated.

In addition, in some embodiments, the first notch portions 46 and the second notch portions 47 may not be provided, and the first supporting portions 126 and the second supporting portions 51 are not provided accordingly, which can further simplify the structure and reduce the difficulty of assembly.

It should be noted that although the present application has been described herein in detail with reference to the above embodiments, those of ordinary skill in the art should understand that those skilled in the art may still modify the present application, and all technical solutions and its improvements that do not apart from the scope of the present application should be covered by the scope of the claims of the present application.

## Claims

1. A control valve, comprising a valve body component (10) and a valve core component (20), wherein the control valve has a valve chamber (102), at least most of the valve core component (20) is located in the valve chamber (102), the valve core component (20) is driven to be rotatable; the valve body component (10) comprises a side wall portion (12), the side wall portion (12) is a peripheral wall or at least a part of the peripheral wall of the valve chamber (102), the valve body component (10) is provided with a communication hole (101), wherein the control valve further comprises a sealing component (40), the sealing component (40) is located between the side wall portion (12) and the valve core component (20), the sealing component (40) comprises an elastic pad and (41) a sealing member (42), the elastic pad (41) and the sealing member (42) are fixed to form an integral structure, the elastic pad (41) is located between the sealing member (42) and the side wall portion (12) of the valve body component (10), the sealing member (42) is in contact with the valve core component (20), a surface of the sealing member (42) in contact with the valve core component (20) is smoother than a surface of the elastic pad (41) in contact with the side wall portion (12), the control valve has a rotation suppression portion, the rotation suppression portion is integrally formed with or fixedly connected to or in position-limiting connection with an inner surface of the valve body component (10), and the rotation suppression portion is fitted with the sealing component (40) to limit the sealing component (40) from rotating clockwise or counterclockwise relative to the valve body component (10),
**characterized in that**, the sealing member (42) is fixedly connected to the elastic pad (41), the sealing member (42) comprises a hemming portion (424) and a fitting portion (423), the fitting portion (423) is arranged toward the valve core component (20) and is in sliding fit with the valve core component (20), the elastic pad (41) has a first through hole (411), the first through hole (411) is in communication with the communication hole (101), the sealing member (42) further has a second through hole (421), the second through hole (421), is in communication with the communication hole (101) through the first through hole (411), the second through hole (421), is formed in the hemming portion (424), at least a part of the hemming portion (424) is inserted into the first through hole (411) and is fixed to an inner wall of the first through hole (411) by adhesion, and a height of the hemming portion (424) is less than a length of the first through hole (411).

2. The control valve according to claim 1, wherein the sealing member (42) comprises at least two position-limiting portions (422) located on two sides of the sealing member (42), each position-limiting portion (422) has an outward protruding structure or a bending structure, the position-limiting portions (422) are located on two sides of the elastic pad (41), and a height of the position-limiting portions (422) is less than a thickness of the two sides of the elastic pad (41); the valve body component (10) has a stop portion (128), the stop portion (128) is arranged to protrude from the side wall portion (12) and is inserted into the valve chamber (102), and the position-limiting portions (422) are in contact with a side surface of the stop portion (128).

3. The control valve according to claim 2, wherein the sealing member (42) further comprises a connecting portion (425), the connecting portion (425) is located between the hemming portion (424) and the fitting portion (423), the hemming portion (424) is rounding connected to the fitting portion (423) by the connecting portion (425), and a diameter of a connection position of the connecting portion (425) with the fitting portion (423) gradually increases in a direction toward the valve core component (20).

4. The control valve according to any one of claims 1 to 3, wherein the elastic pad (41) has a first recessed groove (412) which extends axially, the valve body component (10) has a protruding rib (123) that protrudes from the side wall portion (12), the protruding rib (123) is inserted into the first recessed groove (412), and a height of the protruding rib (123) protruding from the side wall portion (12) is less than a depth of the first recessed groove (412).

5. The control valve according to claim 4, wherein the elastic pad (41) has a first through hole (411), the first recessed groove (412) extends from one end of the elastic pad (41) to the other end of the elastic pad (41) in a longitudinal direction of the elastic pad (41), wherein a plurality of first recessed grooves (412) are provided, the first recessed grooves (412) are distributed on two sides of the first through hole (411), and the protruding rib (123) is in interference fit with the corresponding first recessed groove (412).

6. The control valve according to claim 5, wherein the valve body component (10) further comprises a bottom wall (11) and a boss portion (124), the bottom wall (11) is integrally formed with the side wall portion (12), the boss portion (124) protrudes from the bottom wall (11) and extends toward the valve chamber (102), the boss portion (124) comprises a blocking portion (125) and a first supporting portion (126), the blocking portion (125) protrudes from the first supporting portion (126) by a set distance, wherein the first supporting portion (126) is located between the protruding rib (123) and the blocking portion (125), the protruding rib (123) is connected to the first supporting portion (126), a position-limiting space (127) is formed between the blocking portion (125) and the protruding rib (123), one end of the sealing component (40) is located in the position-limiting space (127), and the sealing component (40) abuts against the first supporting portion (126).

7. The control valve according to claim 5, wherein the valve body component (10) further comprises a bottom wall (11) and a cover (50), the cover (50) is fixedly connected to the side wall portion (12), the valve body component (10) further comprises a first valve core supporting portion (1101) which protrudes from the bottom wall (11), the cover (50) comprise a second valve core supporting portion (1102) which protrudes from an end surface of the cover (50), a part of the valve core component (20) is inserted into the first valve core supporting portion (1101), another part of the valve core component (20) is inserted into the second valve core supporting portion (1102), and the valve core component (20) is rotatably supported on the first valve core supporting portion (1101) and the second valve core supporting portion (1102).

8. The control valve according to any one of claims 1 to 7, wherein the elastic pad (41) is made of rubber material, the valve body component (10) is made of aluminum material or made of plastic material by injection molding, the valve core component (20) is made of plastic material by injection molding, the sealing member (42) is made of Teflon, and the elastic pad (41) is fixed to the sealing member (42) by adhesion.

9. The control valve according to claim 8, wherein the elastic pad (41) has a first recessed groove (412) and a second recessed groove (413), the first recessed groove (412) extends axially, the second recessed groove (413) is arranged circumferentially, the second recessed groove (413) is located on at least one side of the elastic pad (41), and the first recessed groove (412) is in communication with the second recessed groove (413).

## Patentansprüche

1. Steuerventil, umfassend eine Ventilkörperkomponente (10) und eine Ventilkernkomponente (20), wobei das Steuerventil eine Ventilkammer (102) aufweist, sich mindestens ein Großteil der Ventilkernkomponente (20) in der Ventilkammer (102) befindet, die Ventilkernkomponente (20) angetrieben wird, um drehbar zu sein; die Ventilkörperkomponente (10) einen Seitenwandabschnitt (12) umfasst, der Seitenwandabschnitt (12) eine Umfangswand oder mindestens ein Teil der Umfangswand der Ventilkammer (102) ist, die Ventilkörperkomponente (10) mit einem Kommunikationsloch (101) bereitgestellt ist, wobei das Steuerventil ferner eine Dichtungskomponente (40) umfasst, sich die Dichtungskomponente (40) zwischen dem Seitenwandabschnitt (12) und der Ventilkernkomponente (20) befindet, die Dichtungskomponente (40) ein elastisches Polster und (41) ein Dichtungselement (42) umfasst, das elastische Polster (41) und das Dichtungselement (42) befestigt sind, um eine integrale Struktur auszubilden, sich das elastische Polster (41) zwischen dem Dichtungselement (42) und dem Seitenwandabschnitt (12) der Ventilkörperkomponente (10) befindet, das Dichtungselement (42) mit der Ventilkernkomponente (20) in Kontakt steht, eine Oberfläche des Dichtungselements(42) in Kontakt mit der Ventilkernkomponente (20) glatter als eine Oberfläche des elastischen Polsters (41) in Kontakt mit dem Seitenwandabschnitt (12) ist, das Steuerventil einen Drehungsunterdrückungsabschnitt aufweist, der Drehungsunterdrückungsabschnitt mit einer inneren Oberfläche der Ventilkörperkomponente (10) einstückig ausgebildet oder mit dieser fest verbunden ist oder in positionsbegrenzender Verbindung mit dieser steht, und der Drehungsunterdrückungsabschnitt mit der Dichtungskomponente (40) ausgestattet ist, um zu verhindern, dass sich die Dichtungskomponente (40) im Uhrzeigersinn oder gegen den Uhrzeigersinn relativ zu der Ventilkörperkomponente (10) dreht,
**dadurch gekennzeichnet, dass** das Dichtungselement (42) mit dem elastischen Polster (41) fest verbunden ist, das Dichtungselement (42) einen Einfassabschnitt (424) und einen Passabschnitt (423) umfasst, der Passabschnitt (423) zu der Ventilkernkomponente (20) hin angeordnet ist und in Gleitpassung mit der Ventilkernkomponente (20) steht, das elastische Polster (41) ein erstes Durchgangsloch (411) aufweist, das erste Durchgangsloch (411) mit dem Kommunikationsloch (101) in Kommunikation steht, das Dichtungselement (42) ferner ein zweites Durchgangsloch (421) aufweist, das zweite Durchgangsloch (421) durch das erste Durchgangsloch (411) mit dem Kommunikationsloch (101) in Kommunikation steht, das zweite Durchgangsloch (421) in dem Einfassabschnitt (424) ausgebildet ist, mindestens ein Teil des Einfassabschnitts (424) in das erste Durchgangsloch (411) eingesetzt ist und an einer Innenwand des ersten Durchgangslochs (411) durch Haftung befestigt ist, und eine Höhe des Einfassabschnitts (424) kleiner als eine Länge des ersten Durchgangslochs (411) ist.

2. Steuerventil nach Anspruch 1, wobei das Dichtungselement (42) mindestens zwei positionsbegrenzende Abschnitte (422) umfasst, die sich auf zwei Seiten des Dichtungselements (42) befinden, wobei jeder positionsbegrenzende Abschnitt (422) eine nach außen hervorstehende Struktur oder eine Biegestruktur aufweist, sich die positionsbegrenzenden Abschnitte (422) auf zwei Seiten des elastischen Polsters (41) befinden und eine Höhe der positionsbegrenzenden Abschnitte (422) geringer als eine Dicke der zwei Seiten des elastischen Polsters (41) ist; die Ventilkörperkomponente (10) einen Anschlagabschnitt (128) aufweist, der Anschlagabschnitt (128) angeordnet ist, um von dem Seitenwandabschnitt (12) hervorzustehen und in die Ventilkammer (102) eingesetzt ist, und die positionsbegrenzenden Abschnitte (422) mit einer Seitenoberfläche des Anschlagabschnitts (128) in Kontakt stehen.

3. Steuerventil nach Anspruch 2, wobei das Dichtungselement (42) ferner einen Verbindungsabschnitt (425) umfasst, sich der Verbindungsabschnitt (425) zwischen dem Einfassabschnitt (424) und dem Passabschnitt (423) befindet, der Einfassabschnitt (424) durch den Verbindungsabschnitt (425) abgerundet mit dem Passabschnitt (423) verbunden ist, und ein Durchmesser einer Verbindungsposition des Verbindungsabschnitts (425) mit dem Passabschnitt (423) in einer Richtung zu der Ventilkernkomponente (20) hin allmählich zunimmt.

4. Steuerventil nach einem der Ansprüche 1 bis 3, wobei das elastische Polster (41) eine erste vertiefte Nut (412) aufweist, die sich axial erstreckt, die Ventilkörperkomponente (10) eine hervorstehende Rippe (123) aufweist, die von dem Seitenwandabschnitt (12) hervorsteht, die hervorstehende Rippe (123) in die erste vertiefte Nut (412) eingesetzt ist, und eine Höhe der Rippe (123), die von dem Seitenwandabschnitt (12) hervorsteht, kleiner als eine Tiefe der ersten vertieften Nut (412) ist.

5. Steuerventil nach Anspruch 4, wobei das elastische Polster (41) ein erstes Durchgangsloch (411) aufweist, die erste vertiefte Nut (412) sich von einem Ende des elastischen Polsters (41) zu dem anderen Ende des elastischen Polsters (41) in einer Längsrichtung des elastischen Polsters (41) erstreckt, wobei eine Vielzahl von ersten vertieften Nuten (412) bereitgestellt ist, die ersten vertieften Nuten (412) auf zwei Seiten des ersten Durchgangslochs (411) verteilt sind und die vorstehende Rippe (123) in Presspassung mit der entsprechenden ersten vertieften Nut (412) steht.

6. Steuerventil nach Anspruch 5, wobei die Ventilkörperkomponente (10) ferner eine Bodenwand (11) und einen Vorsprungsabschnitt (124) umfasst, die Bodenwand (11) mit dem Seitenwandabschnitt (12) einstückig ausgebildet ist, der Vorsprungsabschnitt (124) von der Bodenwand (11) hervorsteht und sich zu der Ventilkammer (102) hin erstreckt, der Vorsprungsabschnitt (124) einen Blockierabschnitt (125) und einen ersten Stützabschnitt (126) umfasst, der Blockierabschnitt (125) um einen festgelegten Abstand von dem ersten Stützabschnitt (126) hervorsteht, wobei sich der erste Stützabschnitt (126) zwischen der vorstehenden Rippe (123) und dem Blockierabschnitt (125) befindet, die hervorstehende Rippe (123) mit dem ersten Stützabschnitt (126) verbunden ist, ein positionsbegrenzender Raum (127) zwischen dem Blockierabschnitt (125) und der hervorstehenden Rippe (123) ausgebildet ist, sich ein Ende der Dichtungskomponente (40) in dem Positionsbegrenzungsraum (127) befindet, und die Dichtungskomponente (40) an dem ersten Stützabschnitt (126) anliegt.

7. Steuerventil nach Anspruch 5, wobei die Ventilkörperkomponente (10) ferner eine Bodenwand (11) und eine Abdeckung (50) umfasst, die Abdeckung (50) mit dem Seitenwandabschnitt (12) fest verbunden ist, die Ventilkörperkomponente (10) ferner einen ersten Ventilkernstützabschnitt (1101) umfasst, der von der Bodenwand (11) hervorsteht, die Abdeckung (50) einen zweiten Ventilkernstützabschnitt (1102) umfasst, der von einer Endoberfläche der Abdeckung (50) hervorsteht, ein Teil der Ventilkernkomponente (20) in den ersten Ventilkernstützabschnitt (1101) eingesetzt ist, ein anderer Teil der Ventilkernkomponente (20) in den zweiten Ventilkernstützabschnitt (1102) eingesetzt ist, und die Ventilkernkomponente (20) auf dem ersten Ventilkernstützabschnitt (1101) und dem zweiten Ventilkernstützabschnitt (1102) drehbar gestützt ist.

8. Steuerventil nach einem der Ansprüche 1 bis 7, wobei das elastische Polster (41) aus Gummimaterial hergestellt ist, die Ventilkörperkomponente (10) aus Aluminiummaterial hergestellt oder aus Kunststoffmaterial durch Spritzgießen hergestellt ist, die Ventilkernkomponente (20) aus Kunststoffmaterial durch Spritzgießen hergestellt ist, das Dichtungselement (42) aus Teflon hergestellt ist und das elastische Polster (41) durch Haftung an dem Dichtungselement (42) befestigt ist.

9. Steuerventil nach Anspruch 8, wobei das elastische Polster (41) eine erste vertiefte Nut (412) und eine zweite vertiefte Nut (413) aufweist, sich die erste vertiefte Nut (412) axial erstreckt, die zweite vertiefte Nut (413) umlaufend angeordnet ist, sich die zweite vertiefte Nut (413) auf mindestens einer Seite des elastischen Polsters (41) befindet und die erste vertiefte Nut (412) mit der zweiten vertieften Nut (413) in Kommunikation steht.

## Revendications

1. Soupape de commande, comprenant un composant formant corps de soupape (10) et un composant formant obus de soupape (20), dans laquelle la soupape de commande a une chambre de soupape (102), au moins une majeure partie du composant formant obus de soupape (20) est située dans la chambre de soupape (102), le composant formant obus de soupape (20) est entraîné pour pouvoir tourner ; le composant formant corps de soupape (10) comprend une partie de paroi latérale (12), la partie de paroi latérale (12) est une paroi périphérique ou au moins une partie de la paroi périphérique de la chambre de soupape (102), le composant formant corps de soupape (10) est pourvu d'un trou de communication (101), dans laquelle la soupape de commande comprend en outre un composant d'étanchéité (40), le composant d'étanchéité (40) est situé entre la partie de paroi latérale (12) et le composant formant obus de soupape (20), le composant d'étanchéité (40) comprend un coussinet élastique et (41) un élément d'étanchéité (42), le coussinet élastique (41) et l'élément d'étanchéité (42) sont fixés pour former une structure intégrale, le coussinet élastique (41) est situé entre l'élément d'étanchéité (42) et la partie de paroi latérale (12) du composant formant corps de soupape (10), l'élément d'étanchéité (42) est en contact avec le composant formant obus de soupape (20), une surface de l'élément d'étanchéité (42) en contact avec le composant formant obus de soupape (20) est plus lisse qu'une surface du coussinet élastique (41) en contact avec la partie de paroi latérale (12), la soupape de commande a une partie de suppression de rotation, la partie de suppression de rotation est formée intégralement avec une surface intérieure du composant formant corps de soupape (10) ou est reliée de manière fixe à celle-ci ou est en liaison de limitation de position avec celle-ci, et la partie de suppression de rotation est ajustée avec le composant d'étanchéité (40) pour limiter la rotation du composant d'étanchéité (40) dans le sens horaire ou dans le sens antihoraire par rapport au composant formant corps de soupape (10),
**caractérisée en ce que** l'élément d'étanchéité (42) est relié de manière fixe au coussinet élastique (41), l'élément d'étanchéité (42) comprend une partie de bordure (424) et une partie d'ajustement (423), la partie d'ajustement (423) est disposée vers le composant formant obus de soupape (20) et est en ajustement glissant avec le composant formant obus de soupape (20), le coussinet élastique (41) a un premier trou traversant (411), le premier trou traversant (411) est en communication avec le trou de communication (101), l'élément d'étanchéité (42) a en outre un second trou traversant (421), le second trou traversant (421), est en communication avec le trou de communication (101) par le biais du premier trou traversant (411), le second trou traversant (421), est formé dans la partie de bordure (424), au moins une partie de la partie de bordure (424) est insérée dans le premier trou traversant (411) et est fixée à une paroi interne du premier trou traversant (411) par adhérence, et une hauteur de la partie de bordure (424) est inférieure à une longueur du premier trou traversant (411).

2. Soupape de commande selon la revendication 1, dans laquelle l'élément d'étanchéité (42) comprend au moins deux parties de limitation de position (422) situées sur deux côtés de l'élément d'étanchéité (42), chaque partie de limitation de position (422) a une structure en saillie vers l'extérieur ou une structure de flexion, les parties de limitation de position (422) sont situées sur deux côtés du coussinet élastique (41), et une hauteur des parties de limitation de position (422) est inférieure à une épaisseur des deux côtés du coussinet élastique (41) ; le composant formant corps de soupape (10) a une partie de butée (128), la partie de butée (128) est disposée pour faire saillie depuis la partie de paroi latérale (12) et est insérée dans la chambre de soupape (102), et les parties de limitation de position (422) sont en contact avec une surface latérale de la partie de butée (128).

3. Soupape de commande selon la revendication 2, dans laquelle l'élément d'étanchéité (42) comprend en outre une partie de liaison (425), la partie de liaison (425) est située entre la partie de bordure (424) et la partie d'ajustement (423), la partie de bordure (424) est reliée en arrondi à la partie d'ajustement (423) par la partie de liaison (425), et un diamètre d'une position de liaison de la partie de liaison (425) avec la partie d'ajustement (423) augmente progressivement dans une direction vers le composant formant obus de soupape (20).

4. Soupape de commande selon l'une quelconque des revendications 1 à 3, dans laquelle le coussinet élastique (41) a une première rainure en retrait (412) qui s'étend axialement, le composant formant corps de soupape (10) a une nervure en saillie (123) qui fait saillie depuis la partie de paroi latérale (12), la nervure en saillie (123) est insérée dans la première rainure en retrait (412), et une hauteur de la nervure en saillie (123) faisant saillie depuis la partie de paroi latérale (12) est inférieure à une profondeur de la première rainure en retrait (412).

5. Soupape de commande selon la revendication 4, dans laquelle le coussinet élastique (41) a un premier trou traversant (411), la première rainure en retrait (412) s'étend depuis une extrémité du coussinet élastique (41) jusqu'à l'autre extrémité du coussinet élastique (41) dans une direction longitudinale du coussinet élastique (41), dans laquelle une pluralité de premières rainures en retrait (412) sont prévues, les premières rainures en retrait (412) sont réparties sur deux côtés du premier trou traversant (411), et la nervure en saillie (123) est en ajustement serré avec la première rainure en retrait (412) correspondante.

6. Soupape de commande selon la revendication 5, dans laquelle le composant formant corps de soupape (10) comprend en outre une paroi inférieure (11) et une partie formant bossage (124), la paroi inférieure (11) est formée intégralement avec la partie de paroi latérale (12), la partie formant bossage (124) fait saillie depuis la paroi inférieure (11) et s'étend vers la chambre de soupape (102), la partie formant bossage (124) comprend une partie de blocage (125) et une première partie de support (126), la partie de blocage (125) fait saillie depuis la première partie de support (126) sur une distance définie, dans laquelle la première partie de support (126) est située entre la nervure en saillie (123) et la partie de blocage (125), la nervure en saillie (123) est reliée à la première partie de support (126), un espace de limitation de position (127) est formé entre la partie de blocage (125) et la nervure en saillie (123), une extrémité du composant d'étanchéité (40) est située dans l'espace de limitation de position (127), et le composant d'étanchéité (40) vient en butée contre la première partie de support (126).

7. Soupape de commande selon la revendication 5, dans laquelle le composant formant corps de soupape (10) comprend en outre une paroi inférieure (11) et un moyen de recouvrement (50), le moyen de recouvrement (50) est relié de manière fixe à la partie de paroi latérale (12), le composant formant corps de soupape (10) comprend en outre une première partie de support d'obus de soupape (1101) qui fait saillie depuis la paroi inférieure (11), le moyen de recouvrement (50) comprend une seconde partie de support d'obus de soupape (1102) qui fait saillie depuis une surface d'extrémité du moyen de recouvrement (50), une partie du composant formant obus de soupape (20) est insérée dans la première partie de support d'obus de soupape (1101), une autre partie du composant formant obus de soupape (20) est insérée dans la seconde partie de support d'obus de soupape (1102), et le composant formant obus de soupape (20) est supporté de manière à pouvoir tourner sur la première partie de support d'obus de soupape (1101) et la seconde partie de support d'obus de soupape (1102).

8. Soupape de commande selon l'une quelconque des revendications 1 à 7, dans laquelle le coussinet élastique (41) est constitué d'un matériau en caoutchouc, le composant formant corps de soupape (10) est constitué d'un matériau en aluminium ou constitué d'un matériau en plastique par moulage par injection, le composant formant obus de soupape (20) est constitué d'un matériau en plastique par moulage par injection, l'élément d'étanchéité (42) est constitué de téflon, et le coussinet élastique (41) est fixé à l'élément d'étanchéité (42) par adhérence.

9. Soupape de commande selon la revendication 8, dans laquelle le coussinet élastique (41) a une première rainure en retrait (412) et une seconde rainure en retrait (413), la première rainure en retrait (412) s'étend axialement, la seconde rainure en retrait (413) est disposée sur la circonférence, la seconde rainure en retrait (413) est située sur au moins un côté du coussinet élastique (41), et la première rainure en retrait (412) est en communication avec la seconde rainure en retrait (413).
